# EUROPEAN PATENT APPLICATION

(11) **EP 2 006 332 A1**
(43) Date of publication of application: **24.12.2008**
(21) Application number: 07714332.9
(22) Date of filing: 09.02.2007
(51) Int. Cl.: C08L 77/00, C08J 3/20, C08K 3/38, C08L 79/08

(54) **RESIN COMPOSITION AND METHOD FOR PRODUCING SAME**

(30) Priority: 10.02.2006 JP 2006033524; 14.02.2006 JP 2006036145; 01.06.2006 JP 2006153486
(71) Applicant: TEIJIN LIMITED, Osaka-shi Osaka 541-0054 (JP); National Institute for Materials Science, Tsukuba-shi, Ibaraki 305-0047 (JP)
(72) Inventor: KUWAHARA, Hiroaki, Iwakuni-shi, Yamaguchi 740-0014 (JP); HONDA, Susumu, Iwakuni-shi, Yamaguchi 740-0014 (JP); BANDO, Yoshio, Tsukuba-shi, Ibaraki 305-0047 (JP); ZHI, Chunyi, Tsukuba-shi, Ibaraki 305-0047 (JP); TANG, Chengchun, Tsukuba-shi, Ibaraki 305-0047 (JP); GOLBERG, Dmitri, Tsukuba-shi, Ibaraki 305-0047 (JP)
(74) Representative: Hallybone, Huw George
(86) International application number: PCT/JP2007/052802
(87) International publication number: WO 2007/091737

(57) **Abstract**

The object of this invention consists in providing a polyamide resin composition excellent in insulating properties, mechanical properties and dimensional stability.

This invention is a resin composition containing 100 parts by weight of a polyamide resin and 0.01 to 50 parts by weight of boron nitride nanotubes.

## Description

### Technical Field

This invention relates to a resin composition obtained by dispersing boron nitride nanotubes in a polyamide. More specifically, it relates to a resin composition excellent in mechanical strength and dimensional stability and useful in broad application ranges including mechanical parts, electric-electronic parts, automobile parts, etc., a formed product thereof and processes for the production thereof.

### Background Art

Having unconventional mechanical properties, electric properties, thermal properties, etc., carbon nanotubes attract attention as promising materials for nanotechnology and are under study with regard to their application possibility. It has been proposed that carbon nanotubes be added to a polymer for improving a polymer composite in mechanical properties, electric conductivity, heat resistance, etc.

For example, it has been proposed that carbon nanotubes be used for improving a polymer composite in electric conductivity, gas barrier properties, strength, anti-corrosion property, formability, etc. (Patent Document 1). Further, it has been proposed that carbon nanotubes coated with a conjugated polymer be used for improving the elastic modulus of a polymer composite (Patent Document 2).

However, being surface-covered with carbon atoms and having low surface free energy, carbon nanotubes are not easily polarized. It is hence sometimes difficult to disperse the carbon nanotubes uniformly in a polymer. In particular, it is difficult to disperse them in a polar polymer. Since carbon nanotubes have electric conductivity, a polymer composite containing the carbon nanotubes is unsuitable for uses that require electrically insulating properties.

In recent years, boron nitride nanotubes which have been structurally similar to carbon nanotubes are under study (Patent Document 3). The above boron nitride nanotubes are electrically non-conductive and are excellent in thermal conductivity, and they have properties that carbon nanotubes do not have.
(Patent Document 1) JP2005-520021A
(Patent Document 2) JP2004-244490A
(Patent Document 3) JP2000-109306A

### Disclosure of the Invention

Therefore, it is an object of this invention to provide a resin composition that can be applied to uses which require electrically insulating properties adverse to a resin composition containing carbon nanotubes. It is another object of this invention to provide a resin composition excellent in thermal conductivity. It is further another object of this invention to provide a resin composition that gives a formed article excellent in mechanical properties and dimensional stability.

The present inventors have made diligent studies with regard to matrix resins in which boron nitride nanotubes are to be dispersed. As a result, it has been found that boron nitride nanotubes have high polarity, have good affinity with polar polymers, in particular a polyamide, and have excellent dispersibility in a polyamide. And, it has been found that a polyamide resin composition containing boron nitride nanotubes gives a formed article excellent in mechanical properties and dimensional stability. This invention has been accordingly completed.

That is, this invention is a resin composition containing 100 parts by weight of a polyamide and 0.01 to 50 parts by weight of boron nitride nanotubes.

Further, this invention is a formed article obtained from the above resin composition.

Further, this invention includes a process for the production of the above resin composition, which comprises the steps of
(i) mixing 0.01 to 50 parts by weight of boron nitride nanotubes and a solvent to obtain a dispersion,
(ii) adding a polyamide to the dispersion such that the amount of the polyamide is 100 parts by weight when the amount of the boron nitride nanotubes is 0.01 to 50 parts by weight, to obtain a dope, and
(iii) removing the solvent.

Further, this invention is a process for the production of the above resin composition, which comprises melt-kneading a polyamide and boron nitride nanotubes.

Further, this invention is a process for the production of the above resin composition, which comprises carrying out polycondensation in the presence of boron nitride nanotubes to produce a polyamide.

Further, this invention is a process for the production of a formed article, which comprises wet-forming a dope containing 100 parts by weight of a polyamide, 0.01 to 50 parts by weight of boron nitride nanotubes and a solvent into the formed article.

Further, this invention is a process for the production of a formed article, which comprises melt-forming a resin composition containing 100 parts by weight of a polyamide and 0.01 to 50 parts by weight of boron nitride nanotubes into the formed article.

### Brief Explanation of Drawing

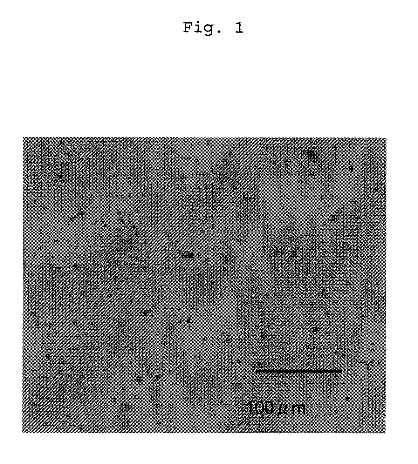

Fig. 1 is an optical electron microscope photograph of a film obtained in Example 11.

### Preferred Embodiments of the Invention

This invention will be explained in detail below. (Boron nitride nanotubes)

The terms "boron nitride nanotubes" as used in this invention refers to a tube-shaped material, and ideally each has a structure in which a hexagonal network-structure surface forms a tube in parallel with the tube axis and forms a single or multiple wall tube. The average diameter of the boron nitride nanotubes is preferably 0.4 nm to 1 µm, more preferably 0.6 to 500 nm, still more preferably 0.8 to 200 nm. The diameter as used herein means an outer diameter when they are single-wall tubes and an outer diameter of an outermost tube when they are multiple wall tubes. The average length thereof is preferably 10 µm or less, more preferably 5 µm or less. The aspect ratio thereof is preferably 5 or more, still more preferably 10 or more. The upper limit of the aspect ratio is not restricted so long as the average length is 10 µm or less, while the upper limit is substantially 25,000. Therefore, the boron nitride nanotubes preferably have an average diameter of 0.4 nm to 1 µm and an aspect ratio of 5 or more. The average diameter and average length of the boron nitride nanotubes refer to average values of fifty boron nitride nanotubes determined on the basis of observation through a transmission electron microscope (TEM).

The boron nitride nanotubes can be synthesized by an arc discharge method, a laser heating method or a chemical vapor deposition method. There is also known a method in which they are synthesized from borazine in the presence of nickel borate as a catalyst. Further, there has been also proposed a synthesis method in which carbon nanotubes are used as a matrix and boron oxide and nitrogen are allowed to react. The boron nitride nanotubes for use in this invention shall not be limited to those produced by these methods. As boron nitride nanotubes, there can be as well used boron nitride nanotubes that are treated with a strong acid or chemically modified.

In this invention, further, the boron nitride nanotubes may be those which are coated with a conjugated polymer each. The conjugated polymer for coating the boron nitride nanotubes is preferably a polymer that performs strong interaction with the boron nitride nanotubes and also performs strong interaction with an aliphatic polyamide which is a matrix resin. Examples of the conjugated polymers include polyphenylene vinylene, polythiophene, polyphenylene, polypyrrole, polyaniline, polyacetylene, etc., and of these, polyphenylene vinylene and polythiophene are preferred.

The boron nitride nanotubes have a local polarity structure based on a dipole interaction between a boron atom and a nitrogen atom, and they are excellent over carbon nanotubes in affinity with, and dispersibility in, a medium having a polarity structure. Further, they have a broad band gap with regard to an electronic structure and hence have the property of electric insulation, and they are also promising as an electrically insulating heat-radiating material. Moreover, differing from carbon nanotubes, they are white in color and hence can be also applied to uses where coloring is undesirable, and it is accordingly possible to create a composite that makes the best use of properties of a polymer.

The resin composition of this invention contains 0.01 to 50 parts by weight, per 100 parts by weight of a polyamide, of the boron nitride nanotubes. While the lower limit of the content of the boron nitride nanotubes per 100 parts by weight of a polyamide is 0.01 part by weight, it is preferably 0.05 part by weight, more preferably 0.1 part by weight, still more preferably 1 part by weight. On the other hand, while the upper limit of the content of the boron nitride nanotubes per 100 parts by weight of a polyamide is 50 parts by weight, it is preferably 40 parts by weight, more preferably 30 parts by weight. Therefore, the content of the boron nitride nanotubes per 100 parts by weight of a polyamide is preferably 0.01 to 30 parts by weight. When the content of the boron nitride nanotubes is adjusted to the above range, they can be uniformly dispersed in a polyamide. Further, when the content of the boron nitride nanotubes is too large, undesirably, it is difficult to obtain a uniform resin composition. The resin composition of this invention may sometimes contain boron nitride flakes, catalyst metal, etc., which are derived from the boron nitride nanotubes.

### (Polyamide)

The polyamide is preferably a polyamide mainly containing recurring units of the following formula (1). 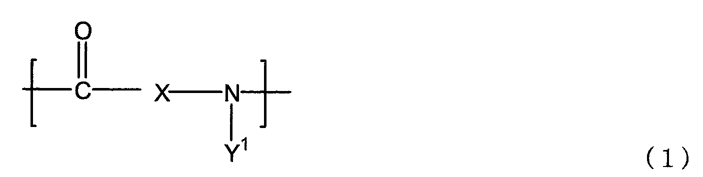 wherein X is

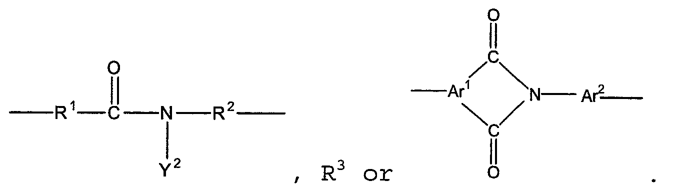

Each of R¹, R² and R³ is independently an aliphatic hydrocarbon group having 2 to 16 carbon atoms or an aromatic hydrocarbon group having 6 to 20 carbon atoms.

The aliphatic hydrocarbon group includes an alkylene group having 4 to 16 carbon atoms and a cycloalkylene group having 5 to 16 carbon atoms.

The aromatic hydrocarbon group includes a phenylene group, a naphthalenediyl group, a biphenylene group, etc. More specifically, it includes a m-phenylene group, a p-phenylene group, an o-phenylene group, 2,6-naphthalenediyl, 2,7-naphthalenediyl, a 4,4'-isopropylidenediphenylene group, a 4,4'-biphenylene group, a 4,4'-diphenylenesulfide group, a 4,4'-diphenylenesulfone group, a 4,4'-dipheylene ketone group, a 4,4'-diphenylene ether group, a 3,4'-diphenylene ether group, a m-xylylene group, a p-xylyene group, an o-xylylnene group, etc. As an aromatic hydrocarbon group, a m-phenylene group, a p-phenylene group and a 3,4'-diphenylene ether group are preferred.

The aliphatic hydrocarbon group and the aromatic hydrocarbon group may have a substituent. The substituent includes halogens such as fluorine, chlorine, bromine, etc.; alkyls having 1 to 6 carbon atoms such as methyl, ethyl, propyl, hexyl, etc.; cycloalkyls having 5 to 10 carbon atoms such as cyclopentyl, cyclohexyl, etc.; and aromatic groups having 6 to 10 carbon atoms such as phenyl, etc.

Ar¹ is an aromatic hydrocarbon group having 6 to 20 carbon atoms. The aromatic hydrocarbon group includes 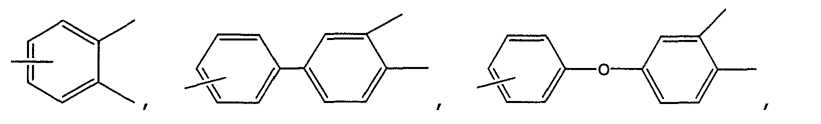 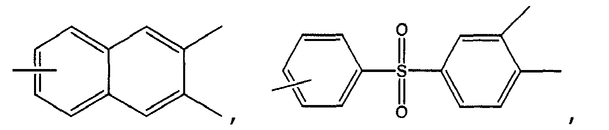 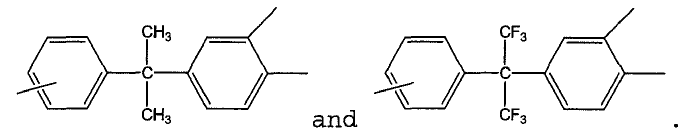 Ar¹ may have a substituent. The substituent includes halogens such as fluorine, chlorine, bromine, etc.; alkyls having 1 to 6 carbon atoms such as methyl, ethyl, propyl, hexyl, etc.; cycloalkyls having 5 to 10 carbon atoms such as cyclopentyl, cyclohexyl, etc.; and aromatic groups having 6 to 10 carbon atoms such as phenyl, etc.

Ar² is an aromatic hydrocarbon group having 6 to 20 carbon atoms or an aliphatic hydrocarbon group having 2 to 16 carbon atoms.

The aromatic hydrocarbon group includes a phenylene group, a naphthalene group, a naphthalenediyl group, a viphenyldiyl group, etc. More specifically, it includes a m-phenylene group, a p-phenylene group, an o-phenylene group, a 2,6-naphthalenediyl group, a 2,7-naphthalenediyl group, a 4,4'-isopropylidene diphenylene group, a 4,4'-biphenylene group, a 4,4'-diphenylene sulfide group, a 4,4'-diphenylene sulfone group, a 4,4'-diphenlene ketone group, a 4,4'-diphenylene ether group, a 3,4'-diphenylene ether group, a m-xylylene group, a p-xylylene group, an o-xylylene group, etc. As an aromatic hydrocarbon group, m-phenylene, p-phenylene and 3,4'-diphenylene ether groups are preferred.

The aromatic hydrocarbon group may have a substituent. The substituent includes halogens such as fluorine, chlorine, bromine, etc.; alkyls having 1 to 6 carbon atoms such as methyl, ethyl, propyl, hexyl, etc.; cycloalkyls having 5 to 10 carbon atoms such as cyclohexyl, etc.; and aromatic groups having 6 to 10 carbon atoms such as phenyl.

The aliphatic hydrocarbon group represented by Ar² includes an alkylene group having 4 to 16 carbon atoms and a cycloalkylene group having 5 to 16 carbon atoms. Specifically, it includes an alkylene group having 4 to 12 carbon atoms or a cycloalkylene group having 5 to 12 carbon atoms. As an aliphatic hydrocarbon group, a tetramethylene, hexamethylene, nonamethylene or 1,4-cyclohexlylene group is preferred.

Each of Y¹ and Y² is independently a hydrogen atom or an alkyl group having 1 to 16 carbon atoms. The alkyl group includes methyl, ethyl, etc.

The polyamide may be any one of a homopolymer and a copolymer containing units of two or more kinds represented by the formula (1) in combination. The polyamide preferably contains 90 to 100 mol%, more preferably 95 to 100 mol%, of recurring units of one kind in the formula (1). Further, a component or components of other kind is or are preferably included in the recurring units of the formula (1).

The polyamide is preferably amorphous or crystalline. The polyamide is preferably a polyamide selected from an aliphatic polyamide, an aromatic polyamide, a semi-aromatic polyamide, a polyamideimide and an amorphous polyamide. The number average molecular weight of the polyamide is preferably 5,000 to 500,000, more preferably 10,000 to 200,000.

### (Aliphatic polyamide)

The aliphatic polyamide is preferably an aliphatic polyamide that mainly contains recurring units of the following formula (2).

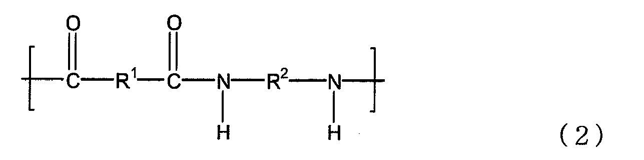

In the formula (2), each of R¹ and R² is independently a divalent aliphatic hydrocarbon group having 4 to 16 carbon atoms. The aliphatic hydrocarbon group includes an alkylene group having 4 to 16 carbon atoms and a cycloalkylene group having 5 to 16 carbon atoms. More specifically, it includes an alkylene group having 4 to 12 carbon atoms or a cycloalkylene group having 5 to 12 carbon atoms. In the formula (2), R¹ is preferably a tetramethylene group, a hexamethylene group, a decamethylene group or a 1,4-cyclohexylene group. R² is preferably a tetramethylene group, a hexamethylene group, a nonamethylene group or a 1,4-cyclohexylene group.

Further, the aliphatic polyamide is preferably an aliphatic polyamide containing recurring units of the following formula (3).

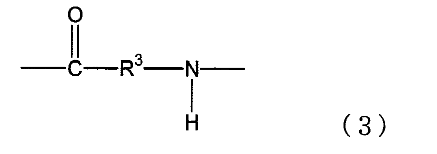

In the formula (3), R³ is an aliphatic hydrocarbon group having 2 to 12 carbon atoms. The aliphatic hydrocarbon group includes an alkylene group having 4 to 16 carbon atoms and a cycloalkylene group having 5 to 16 carbon atoms. More specifically, it includes an alkylene group having 4 to 12 carbon atoms or a cycloalkylene group having 5 to 12 carbon atoms. R³ is preferably a pentamethylene group, a decamethylene group or an undecamethylene group.

The aliphatic polyamide may be a homopolymer or may be a copolymer containing units of two or more kinds selected from the formulae (2) and (3) in combination. The content of the recurring units of the formulae (2) and (3) in the aliphatic polyamide is preferably 90 to 100 mol%, more preferably 95 to 100 mol%. As other component, preferably, recurring units of the above formula (1) excluding the aliphatic polyamide are contained.

The aliphatic polyamide is a polymer having an amide bond in its main chain, which is obtained from an aliphatic aminocarboxylic acid, a lactam, or an aliphatic diamine and an aliphatic dicarboxylic acid (including a pair of salts therefrom) as main raw materials. As specific examples of the raw materials, the aliphatic aminocarboxylic acid includes 6-aminocaproic acid, 11-aminoundecanoic acid, 12-aminodocanoic acid, etc. The lactam includes ε-caprolactam, ω-undecanolactam, ω-laurolactam, etc. The diamine includes tetramethylenediamine, hexamethylenediamine, undecamethylenediamine, dodecamethylenediamine, 2,2,4-/2,4,4-trimethylhexamethylenediamine, 5-methylnonamethylenediamine, 2,4-dimethyloctamethylenediamine, 1,3-bis(aminomethyl)cyclohexane, bis(4-aminocyclohexyl)methane, bis(3-methyl-4-aminocyclohexyl)methane, 2,2-bis(4-aminocyclohexyl)propane, bis(aminopropyl)piperazine, aminoethyl piperazine, etc. Further, the aliphatic dicarboxylic acid includes adipic acid, suberic acid, azelaic acid, sebacic acid, dodecandioic acid, 1,4-cyclohexanedicarboxylic acid, 1,3-cyclohexanedicarboxylic acid, etc. Further, these aliphatic diamines and aliphatic dicarboxylic acids can be used in a form in which they are converted to a pair of salts each.

Examples of the above aliphatic polyamide resin preferably include polycaproamide (nylon 6), polytetramethylene adipamide (nylon 46), polyhexamethylene adipamide (nylon 66), a polycaproamide/polyhexamethylene adipamide copolymer (nylon 6/66), polyundecamide (nylon 11), polydodecamide (nylon 12), polyhexamethylene sebacamide (nylon 610), polyhexamethylene dodecamide (nylon 612), polyundecamethylene adipamide (nylon 116), polybis(4-aminocyclohexyl)methane dodecamide (nylon PACM12), polybis(3-methyl-4-aminocyclohexyl)methane dodecamide (nylon dimethyl PACM12), poly(1,4-cyclohexamethylene)adipamide, polyhexamethylene-1,4-cyclohexylene carboamide, and mixtures or copolymers of these.

Further, at least two of these monomers may be used in combination to prepare an aliphatic polyamide copolymer. Further, the aliphatic polyamide may be modified by introducing an amino group, a carboxyl group, a carbonyl group or an amide or ester derivative structure thereof into part of its main chain or terminal group. A proportion of monomers may be imparted with an ether or urethane structure before the copolymerization. Of these, nylon 6, nylon 6/66, nylon 66, nylon 46, nylon 12 or mixtures or copolymers of these are preferred as an aliphatic polyamide that is used, and nylon 6, nylon 6/66 and nylon 66 are particularly preferred.

The polymerization degree of the aliphatic polyamide is not specially limited, while the relative viscosity obtained by measurement using a 96 mass% concentrated sulfuric acid under conditions of a temperature of 25°C and a concentration of 1 g/dl is preferably in the range of 1.0 to 10.0, particularly preferably in the range of 2.0 to 8.0. When the relative viscosity is less than 1.0, a formed article tends to be poor in mechanical properties. When it exceeds 10.0, a resin composition is liable to be poor in a molten state or flowability in a molten state and is greatly decreased in formability or moldability. The number average molecular weight of the aliphatic polyamide is preferably 5,000 to 500,000, more preferably 10,000 to 200,000.

An aliphatic polyamide having an electron structure composed of an atomic group capable of bonding to a hydrogen such as an amide bond, etc., in its polymer main chain skeleton can perform an electrostatic interaction at a molecular level with boron nitride nanotubes having polarity and a nano-level structure.

A resin composition containing the aliphatic polyamide in this invention has a specific interaction between the aliphatic polyamide and the boron nitride nanotubes, and in spite of a small content of the boron nitride nanotubes that are contained, it has excellent heat resistance and mechanical properties.

### (Aromatic polyamide)

The aromatic polyamide is preferably an aromatic polyamide mainly containing recurring units of the following formula (2).

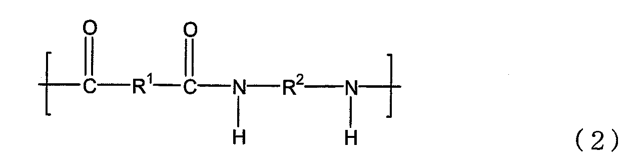

In the formula (2), each of R¹ and R² is independently a divalent aromatic hydrocarbon group having 6 to 20 carbon atoms. The aromatic hydrocarbon includes a phenylene group, a naphthalenediyl group, a biphenyldiyl group, etc.

Specific examples of R¹ and R² includes a m-phenylene group, p-phenylene group, an o-phenylene group, a 1,6-napthalenediyl group, a 2,7-naphthalenediyl group, a 4,4'-isopropylidene diphenylene group, a 4,4'-biphenylene group, a 4,4'-diphenylene sulfide group, a 4,4'-diphenylene sulfone group, a 4,4'-diphenylene ketone group, a 4,4'-diphenylene ether group, a m-xylylene group, a p-xylylene group, an o-xylylene group, etc.

One or a plurality of hydrogen atoms of these aromatic groups may be independently replaced with halogen atoms such as fluorine, chlorine, bromine, etc.; alkyls having 1 to 6 carbon atoms such as methyl, ethyl, propyl, hexyl, etc.; cycloalkyls having 5 to 10 carbon atoms such as cyclopentyl, cyclohexyl, etc.; or an aromatic group having 6 to 10 carbon atoms such as phenyl, etc. The aromatic groups represented by R¹ and R² may be constituted of two or more aromatic groups. Of these, m-phenylene and p-phenylene groups are preferred as R¹. As R², m-phenylene, p-phenylene and 3,4'-diphenylene ether groups are preferred.

The aromatic polyamide preferably includes the following polyamides.
(i) An aromatic polyamide that is a copolymer in which R² represents a p-phenylene group and a 3,4'-diphenylene ether group and R¹ is a p-phenylene group and that has a copolymerization ratio (molar ratio of the p-phenylene group represented by R² and the 3,4'-diphenylene ether group) in the range of 1:0.8 to 1:1.2.
(ii) an aromatic polyamide in which both R² and R¹ are p-phenylene groups.
(iii) an aromatic polyamide in which both R² and R¹ are m-phenylene groups.

The aromatic polyamide may be a homopolymer or may be a copolymer containing units of two or more kinds represented by the formula (2) in combination. Further, the content of the recurring units of the formula (2) in the aromatic polyamide is preferably 90 to 100 mol%, more preferably 95 to 100 mol%. As other component, preferably, recurring units of the above formula (1) excluding the aromatic polyamide are contained.

The aromatic polyamide can be produced by a conventionally known method such as a solution polymerization method, an interfacial polymerization method, a melt-polymerization method or the like. The polymerization degree thereof can be controlled on the basis of amount ratio of the aromatic diamine component and the aromatic dicarboxylic acid component. Concerning the molecular weight of the polymer, preferably, the inherence viscosity ηᵢₙₕ measured in a solution of 0.5 g/100 mL of the polymer in 98 % wt.% concentrated sulfuric acid at 30°C is 0.05 to 20 dL/g, and more preferably, it is 1.0 to 10 dL/g. The number average molecular weight of the aromatic polyamide is preferably 5,000 to 500,000, more preferably 10,000 to 200,000.

The solvent for use in the production of the aromatic polyamide by polymerization includes (i) organic polar amide solvents such as N,N-dimethylformamide, N,N-dimethylacetamide, N-methyl-2-pyrrolidone, N-methylcaprolactam, etc., (ii) water-soluble ether compounds such as tetrahydrofuran, dioxane, etc., (iii) water-soluble alcohol compounds such as methanol, ethanol, ethylene glycol, etc., (iv) water-soluble ketone compounds such as acetone, methyl ethyl ketone, etc., (v) water-soluble nitrile compounds such as acetonitrile, propionitrile, etc., and the like. These solvents can be used in the form of a mixture containing two or more of them and are not specially limited. The above solvent is desirably a solvent prepared by dehydration.

In this case, a known inorganic salt in a proper amount may be added before, during, or at a time of completion of, the polymerization, for improving the solubility. Examples of the inorganic salt include lithium chloride, calcium chloride, etc.

When the aromatic polyamide is produced, the diamine component and the acid chloride component are used preferably in a molar ratio of the diamine component to acid chloride component of from 0.90 to 1.10, more preferably from 0.95 to 1.05.

Terminals of the aromatic polyamide can be blocked. When they are blocked with a terminal stopper, the terminal stopper includes, for example, phthalic acid chloride and phthalic acid chloride having a substituent. An amine component includes aniline and aniline having a substituent. For capturing acids such as hydrogen chloride generated in a generally employed reaction between acid chloride and a diamine, aliphatic and aromatic amines and quaternary ammonium salt may be used in combination. After completion of the reaction, a basic inorganic compound such as sodium hydroxide, potassium hydroxide, calcium hydroxide, calcium oxide, or the like is added as required for carrying out a neutralization reaction.

The reaction requires no special limitations to its conditions. In general, a reaction between an acid chloride and a diamine rapidly proceeds, and the reaction temperature is, for example, -25°C to 100°C, preferably -10°C to 80°C. The thus-obtained aromatic polyamide is poured into a non-solvent such as an alcohol or water to precipitate it, and a precipitate can be recovered in the form of a pulp. It can be dissolved in other solvent and used for forming or molding, while a solution obtained by the polymerization reaction can be used intact as a forming or molding solution.

### (Semi-aromatic polyamide)

The polyamide is preferably a semi-aromatic polyamide containing recurring units of the following formula (2).

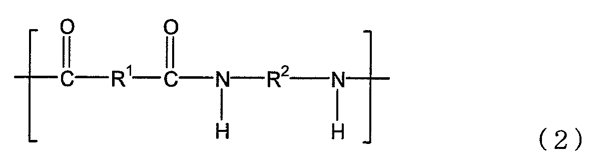

In the formula (2), R¹ is an aromatic hydrocarbon group having 6 to 20 carbon atoms. The aromatic hydrocarbon group includes a phenylene group, a naphthalenediyl group, a biphenylenediyl group, etc. Specific examples of R¹ includes a m-phenylene group, a p-phenylene group, an o-phenylene group, a 2,6-naphthalenedinyl group, a 2,7-naphthalenediyl group, a 4,4'-isopropylidene diphenylene group, a 4,4'-biphenylene group, a 4,4'-diphenylene sulfide group, a 4,4'-diphenylene sulfone group, a 4,4'-diphenylene ketone group, a 4,4'-diphenylene ether group, a 3,4'-diphenylene ether group, a m-xylylene group, a p-xylylene group, an o-xylylene group, etc.

R² is an aliphatic hydrocarbon group having 2 to 20 carbon atoms. The aliphatic hydrocarbon group includes an alkylene group having 2 to 20 carbon atoms and a cycloalkylene group having 5 to 16 carbon atoms. More specifically, it includes an alkylene group having 4 to 12 carbon atoms and a cycloalkylene group having 5 to 12 carbon atoms. R² in the formula (2) is preferably a tetramethylene group, a hexamethylene group, a nonamethylene group or a 1,4-cyclohexylene group.

The semi-aromatic polyamide may be a homopolymer or may be a copolymer containing units of two or more kinds represented by the formula (2) in combination. Further, the content of the recurring units of the formula (2) in the semi-aromatic polyamide is preferably 90 to 100 mol%, more preferably 95 to 100 mol%. As other component, preferably, recurring units of the above formula (1) excluding the semi-aromatic polyamide are contained. The number average molecular weight of the semi-aromatic polyamide is preferably 5,000 to 100,000, more preferably 10,000 to 50,000.

### (Polyamideimide)

Preferably, the polyamideimide mainly contains recurring units of the following formula (4).

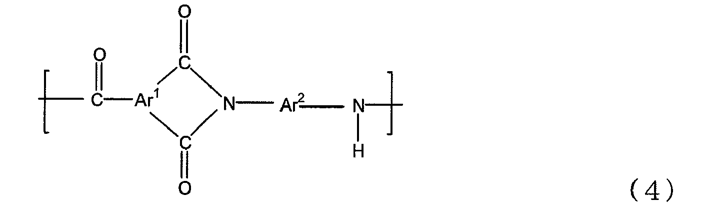

In the formula, Ar¹ is a trivalent aromatic hydrocarbon group having 5 to 20 carbon atoms. Ar¹ is preferably

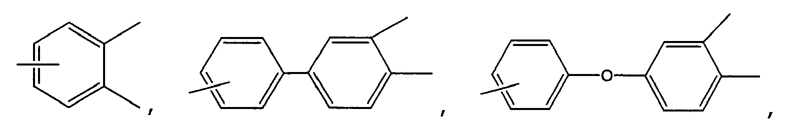

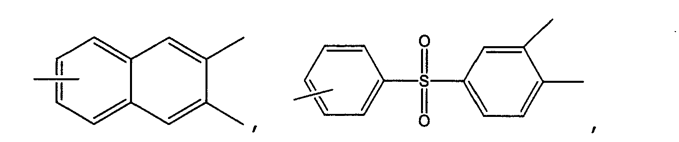

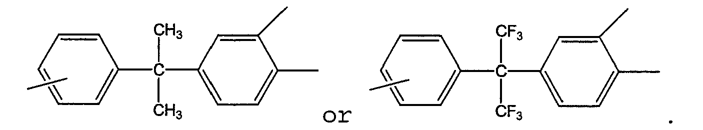

In the formula, Ar² is a divalent aromatic hydrocarbon group having 5 to 20 carbon atoms. Ar² is preferably 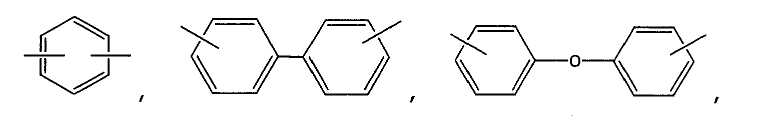 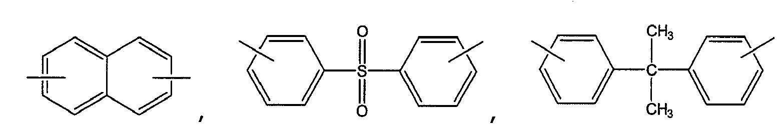 or

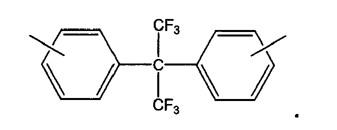

The aromatic groups represented by Ar¹ and Ar² may have one or two or more substituents. The substituents include halogens such as fluorine, chlorine, bromine, etc.; alkyls having 1 to 6 carbon atoms such as methyl, ethyl, propyl, hexyl, etc.; cycloalkyls having 5 to 10 carbon atoms such as cyclopentyl, cyclohexyl, etc.; and an aromatic group having 6 to 10 carbon atoms such as phenyl, etc.

The polyamideimide may be a homopolymer or may be a copolymer containing units of two or more kinds represented by the formula (4) in combination. Further, the content of the recurring units of the formula (4) in the polyamideimide is preferably 90 to 100 mol%, more preferably 95 to 100 mol%. As other component, preferably, recurring units of the above formula (1) excluding the polyamideimide of the formula (4) are contained.

As a carboxylic acid component for forming the recurring units of the formula (4), there can be employed an aromatic tricarboxylic acid and an anhydride thereof. Specifically, trimellitic acid, naphthalene-1,2,4-tricarboxylic acid and anhydrides of these are employed. Trimellitic acid is particularly preferred. A mixture of a plurality of tricarboxylic acids can be used as well.

For imparting solubility in a solvent, polymerizability, etc., there can be used an aliphatic dicarboxylic acid, an aromatic dicarboxylic acid, a tetracarboxylic acid or a dianhydride such as alkylene glycol bisanhydrotrimellitate, etc., in addition to the aromatic tricarboxylic acid.

The aliphatic dicarboxylic acid includes oxalic acid, malonic acid, succinic acid, glutaric acid, adipic acid, pimellitic acid, pimelic acid, suberic acid, azelaic acid, sebacic acid, undecanedioic acid, tridecanedioic acid, etc., and adipic acid and sebacic acid are preferred.

The aromatic dicarboxylic acid includes isophthalic acid, 5-tert-butyl-1,3-beznenedicarboxylic acid, terephthalic acid, diphenylmethane-4,4'-dicarboxylic acid, diphenylmethane-2,4-dicarboxylic acid, diphenylmethane-3,4-dicarboxylic acid, diphenylmethane-3,3'-dicarboxylic acid, 1,2-diphenylethane-4,4'-dicarboxylic acid, diphenylethane-2,4-dicarboxylic acid, diphenylethane-3,4-dicarboxylic acid, diphenylethane-3,3'-dicarboxylic acid, 2,2'-bis(4-carboxyphenyl)propane, 2-(2-carboxyphenyl)-2-(4-carboxyphenyl) propane, 2-(3-carboxyphenyl)-2-(4-carboxyphenyl) propane, diphenyl ether-4,4'-dicarboxylic acid, diphenyl ether-2,4-dicarboxylic acid, diphenyl ether-3,4-dicarboxylic acid, diphenyl ether-3,3'-dicarboxylic acid, diphenylsulfone-4,4'-dicarboxylic acid, diphenylsulfone-2,4-dicarboxylic acid, diphenylsulfone-3,4-dicarboxylic acid, diphenylsulfone-3,3'-dicarboxylic acid, benzophenone-4,4'-dicarboxylic acid, benzophenone-2,4-dicarboxylic acid, benzophenone-3,4-dicarboxylic acid, benzophenone-3,3'-dicarboxylic acid, pyridine-2,6-dicarboxylic acid, naphthalenedicarboxylic acid, bis-[(4-carboxy)phthalimide]-4,4'-diphenyl ether, bis-[(4-carboxy)phthalimide]-α,α-m-xylene, etc., and isophthalic acid and terephthalic acid are preferred.

The tetracarboxylic acid includes butane-1,2,3,4-tetracarboxylic acid, pyromellitic acid, benzophenone-3,3',4,4'-tetracarboxylic acid, diphenyl ether-3,3',4,4'-tetracarboxylic acid, biphenyl-3,3',4,4'-tetracarboxylic acid, naphthalene-2,3,6,7-tetracarboxylic acid, naphthalene-1,2,4,5-tetracarboxylic acid, naphthalene-1,4,5,8-tetracarboxylic acid, etc. Dianhydrides of these are also included. Pyromellitic dianhydride is preferred.

The alkylene glycol bisanhydrotrimellitate includes ethylene glycol bisanhydrotrimellitate, propylene glycol bisanhydrotrimellitate, polyethylene glycol bisanhydrotrimellitate, polypropylene glycol bisanhydrotrimellitate, etc., and ethylene glycol bisanhydrotrimellitate is preferred.

These acid components may be used singly or as a mixture of two or more of them (e.g., isophthalic acid and ethylene glycol bisanhydrotrimellitate) together with trimellitic anhydride.

On the other hand, a diamine is employed as the amine component. Specifically, the diamine includes aromatic diamines such as m-phenylenediamine, p-phenylenediamine, oxydianiline, methylenedianiline, hexafluoroisopropylidenedianiline, diamino-m-xylene, diamino-p-xylene, 1,4-napthalenediamine, 1,5-napthalenediamine, 2,6-napthalenediamine, 2,7-napthalenediamine, 2,2'-bis-(4-aminophenyl)propane, 2,2'-bis-(4-aminophenyl)hexafluoropropane, 4,4'-diaminodiphenyl sulfone, 4,4'-diaminodiphenyl ether, 3,3'-diaminodiphenyl sulfone, 3,4-diaminobiphenyl, 4,4'-diaminobenzophenone, 3,4-diaminodiphenyl ether, isopropylidenedianiline, 3,3'-diaminobenzophenone, 4,4'-diaminodiphenylmethane, o-tolidine, 2,4-tolylenediamine, 1,3-bis-(3-aminophenoxy)benzene, 1,3-bis-(4-aminophenoxy)benzene, 1,4-bis-(4-aminophenoxy)benzene, 2,2-bis-[4-(4-aminophenoxy)phenyl]propane, bis-[4-(4-aminophenoxy)phenyl]sulfone, bis-[4-(3-aminophenoxy)phenyl]sulfone, 4,4'-bis-(4-aminophenoxy)biphenyl, 2,2'-bis-[4-(4-aminophenoxy]hexafluoropropane, 4,4'-diaminodiphenyl sulfide, 3,3'-diaminodiphenyl sulfide, etc.; aliphatic diamines such as ethylenediamine, propylenediamine, tetramethylenediamine, hexamethylenediamine, etc.; alicyclic diamines such as dicyclohexyl-4,4'-diamine, isophorone diamine, etc.; and the like. Further, isocyanate formed by replacing the amino group of the above diamine with a group of -N=C=O is also included. The above amine components may be used singly or in combination of the two or more of them.

Generally, the acid component and the amine component are mixed on an equimolar basis, while one of them can be increased to some extent as required.

The polyamideimide for use in this invention can be produced by a general method such as a diisocyanate method, an acid chloride method, etc., and a diisocyanate method is preferred in view of polymerizability and a cost.

The solvent for use in the polyamideimide production by polymerization includes amide solvents such as N-methyl-2-pyrrolidone, dimethylacetamide, dimethylformamide, etc.; sulfur-containing solvents such as dimethyl sulfoxide, sulfolane, etc.; nitro solvents such as nitromethane, nitroethane, etc.; ether solvents such as diglyme, tetrahydrofuran, etc.; ketone solvents such as cyclohexanone, methyl ethyl ketone, etc.; nitrile solvents such as acetonitrile, propionitrile, etc.; and other solvents having a relatively high dielectric constant such as γ-butyrolactone, tetramethylurea, etc.; and γ-butyrolactone is preferred. These may be used singly or as a mixture (e.g., a mixture of N-methyl-2-pyrrolidone with diglyme, etc.), and may be also used as mixtures with solvents having a relatively low dielectric constant such as xylene, toluene, etc.

The reaction temperature is generally 50 to 200°C, preferably 70 to 180°C. For promoting the reaction, there may be added catalysts such as tertiary amines (e.g., t-butylamine, etc.), metals (e.g., alkali metal, alkaline earth metal, cobalt, tin, zinc, etc.) and metalloid compounds.

The inherent viscosity of the thus-obtained polyamideimide solution is preferably 0.2 dl/g or more, more preferably 0.3 dl/g or more. When the inherent viscosity is less than 0.2 dl/g, the resin is decreased in toughness and flexibility and is fragile. The inherent viscosity can be adjusted by adjusting the molar ratio of an acid component and an amine component (trimellitic anhydride and diamine or diisocyanate) that are charged or selecting a catalyst. Further, the inherent viscosity refers to data obtained by measuring a solution of 0.5 g (solid content) of a polyamideimide in 100 ml of N-methyl-2-pyrrolidone with a Ubbelohde viscometer at 25°C.

The number average molecular weight of the polyamideimide when it is measured by gel permeation chromatography using a polystyrene standard is preferably 5,000 to 50,000, more preferably 8,000 to 30,000. The glass transition temperature thereof is preferably 180°C or higher, more preferably 200°C or higher.

A polyamideimide having an electron structure composed of an atomic group having donating capability such as an amide bond, an imide bond, etc., in its polymer main chain skeleton can perform an electrostatic interaction at a molecular level with boron nitride nanotubes having polarity and a nano-level structure.

The resin composition containing the polyamideimide in this invention has a specific interaction between the polyamideimide and the nanotubes, and in spite of a small content of the boron nitride nanotubes that are contained, it has excellent heat resistance and mechanical properties.

### (Amorphous polyamide)

The amorphous polyamide for use in this invention can be selected from known materials. The amorphous polyamide includes a group of special polyamides that are called transparent nylon and in which almost no crystallization of a polymer takes place or the rate of crystallization is very small, and it refers to polyamides having a crystallinity of less than 10 %. It is characterized by having transparency resulting from its being amorphous, and it gives a transparent molded or formed product under usual melt-molding or forming conditions. The molded or formed product is free from the devitrification that is caused by post-crystallization during heat treatment or water-absorption treatment. Further, it is characterized by having neither any clear melting point nor any measurable heat of melting. It is expedient that this heat of melting be measured with a differential scanning calorimeter (DSC), and in this invention a polyamide having a heat of melting of less than 1 cal/g when measured with this apparatus is defined as an amorphous polyamide. Further, a polymer is measurable for a heat of melting even when it forms a composition with boron nitride nanotubes, and a polymer having a heat of melting of less than 1 cal/g when measured in the form of a composition is also defined as an amorphous polymer.

The above amorphous polyamide can be produced by using a specific monomer, by copolymerization or by a combination of these. For producing an amorphous polyamide resin, it is required to use a monomer having a structural portion that impairs crystallization, that is, a side chain or a cyclic structure such as a cyclohexane ring or a phenol ring which imparts a polymer chain with irregularity, regardless of whether a formed polyamide is a homopolymer or it is a copolymer.

The amorphous polyamide is preferably a polyamide produced from a lactam, aminocarboxylic acid or a pair of diamine and a dicarboxylic acid, etc., as monomer components.

The lactam includes ε-caprolactam, ω-laurolactam, etc.

The aminocarboxylic acid includes 6-aminocaproic acid, 11-aminoundecanoic acid, 12-aminodocanoic acid, p-aminobenzoic acid, etc.

The diamine includes diamines such as tetramethylenediamine, hexamethylenediamine, trimethyl-1,6-hexamethylenediamine, undecamethylenediamine, dodecamethylenediamine, 2,2,4-trimethylhexamethylenediamine, 2,4,4-trimethylhexamethylenediamine, 5-methylnonamethylenediamine, m-xylenediamine, p-xylenediamine, 1,3-bis(aminomethyl)cyclohexane, 1,4-bis(aminomethyl)cyclohexane, bis(4-aminocyclohexyl)methane, bis(3-aminocyclohexyl)methane, 3-aminocyclohexyl-4-aminocyclohexylmethane, 1-amino-3-aminomethyl-3,5,5-trimethylcyclohexane, bis(3-methyl-4-aminocyclohexyl)methane, 2,2-bis(4-aminocyclohexyl)propane, bis(aminopropyl)piperazine, bis(aminoethyl)piperazine, etc.

The dicarboxylic acid includes adipic acid, suberic acid, azelaic acid, sebacic acid, dodecanedioic acid, terephthalic acid, isophthalic acid, naphthalenedicarboxylic acid, cyclohexane-1,4-dicarboxylic acid, etc.

The amorphous polyamide is preferably a polyamide mainly containing recurring units of the following formula (2).

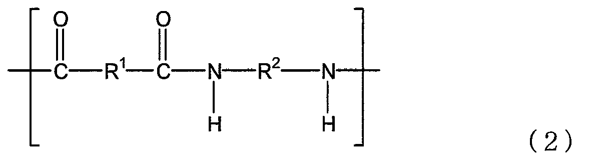

R¹ is a phenylene group. The phenylene group includes a p-phenylene group, a m-phenylene group and a combination of these.

R² is an aliphatic hydrocarbon group having 3 to 16 carbon atoms and having a side chain or an alicyclic group having 5 to 16 carbon atoms. The aliphatic hydrocarbon group as a main chain includes an alkylene group having 3 to 16 carbon atoms. More specifically, it includes a pentamethylene group, a hexamethylene group and an octamethylene group. The side chain includes an alkylene group having 3 to 16 carbon atoms. More specifically, it includes methyl, ethyl, etc. The aliphatic hydrocarbon group may have two or more side chains.

The alicyclic hydrocarbon group includes a cycloakylene group having 5 to 16 carbon atoms. More specifically, it includes a cyclopentylene group, a cyclohexylene group and a cyclooctylene group.

The amorphous polyamide may be a homopolymer or may be a copolymer containing units of two or more kinds represented by the formula (2) in combination. Further, the content of the recurring units of the formula (2) in the amorphous polyamide is preferably 90 to 100 mol%, more preferably 95 to 100 mol%. As other component, preferably, recurring units of the above formula (1) excluding the amorphous polyamide of the formula (2) are contained.

The amorphous polyamide preferably has a glass transition temperature of 100°C or higher. Specific examples of the amorphous polyamide include the following polymers.
a) A polymer obtained by polycondensation of 2,2,4/2,4,4-trimethylhexamethylenediamine and terephthalic acid and/or isophthalic acid.
b) A polymer obtained by polycondensation of hexamethylenediamine and 55 to 100 parts by weight of isophthalic acid and 45 to 0 % by weight of terephthalic acid (based on a total acid amount).
c) A polymer obtained by polycondensation of a mixture of 70 to 100 parts by weight of 2,2,4- and/or 2,4,4-trimethylhexamethylenediamine with 30 to 0 % by weight of hexamethylenediamine (based on a total diamine amount) and a mixture of 0 to 100 % by weight of terephthalic acid with 100 to 0 % by weight of isophthalic acid (based on a total acid amount).
d) A polymer obtained by polycondensation of 1) an alicyclic diamine having 8 to 20 carbon atoms and having at least one cyclohexyl component, 2) 50 to 100 % by weight of isophthalic acid and 50 to 0 % by weight of terephthalic acid, and 10 to 50 % by weight of a lactam having 4 to 12 carbon atoms, ω-aminocarboxylic acid or a salt of an aliphatic dicarboxylic acid having 4 to 12 carbon atoms with an aliphatic diamine having 2 to 12 carbon atoms (based on a total polyamide amount).
e) A polymer obtained by polycondensation of 1) 40 to 98 % by weight, based on the total amount of acids present, of isophthalic acid, 2) 2 to 60 % by weight, based on the total amount of acids present, of terephthalic acid, 3) 50 to 98 % by weight, based on the total amount of amines present, of hexamethylenediamine and iv) 2 to 50 % by weight, based on the total amount of amines present, of an aliphatic diamine having 6 to 20 carbon atoms and having at least one cyclohexane ring.
   These amorphous polyamides may be used singly or may be used as a mixture of a plurality of them.
   The amorphous polyamide for use in this invention can be produced by any known method such as a melt polymerization, solution polymerization, bulk polymerization or interfacial polymerization method or the like. For obtaining a higher-molecular-weight polyamide, there may be employed a known solid phase polymerization method, a polymerization method using an extruder for a higher polymerization degree or a combination of these methods. Of these, the melt polymerization method is the most general from the viewpoint of polymerizability and a cost. As a melt polymerization method, there can be preferably carried out (1) a method in which an aqueous solution of a neutral salt (to be referred to as "nylon salt" hereinafter) of a diamine and a dicarboxylic acid or its derivative is temperature-increased and concentrated under pressure and polymerization is carried out in a molten state while water added and condensation water are removed, (2) a method in which a nylon salt, ω-aminocarboxylic acid and/or a lactam are temperature-increased and concentrated under pressure and polymerization is carried out in a molten state while water added and condensation water are removed, and the like.

When the melt polymerization is carried out, a carboxylic acid or a corresponding derivative such as a carboxylic acid chloride, carboxylic acid active ester or the like is reacted and polymerized with a corresponding diamine in the presence of a proper solvent with stirring, whereby the amorphous polyamide can be obtained.

The solvent for use in the amorphous polyamide production by polymerization includes amide solvents such as N-methyl-2-pyrrolidone, dimethylacetamide, dimethylformamide, etc.; sulfur-containing solvents such as dimethyl sulfoxide, sulfolane, etc.; nitro solvents such as nitromethane, nitroethane, etc.; ether solvents such as diglyme, tetrahydrofuran, etc.; ketone solvents such as cyclohexanone, methyl ethyl ketone, etc.; nitrile solvents such as acetonitrile, propionitrile, etc.; and other solvents having a relatively high dielectric constant such as tetramethylurea, etc. Further, the solvent can be also preferably selected from solvents having a relatively low dielectric constant, which dissolve monomer components but do not dissolve a polymer produced by polymerization so that the polymer can be isolated and purified, such as xylene, ethylbenzene, mesitylene, pseudocumene, isopropylbenzene, diphenyl ether, biphenyl, dimethylbiphenyl, diethylbiphenyl, trimethylbiphenyl, triethylbiphenyl, tripropylbiphenyl, tetraethylbiphenyl, cyclohexylbiphenyl, cyclohexylbenzene, triphenyl hydride, biphenyl hydride, terphenyl hydride, benzyltoluene, isopropylnaphthalene. These may be used singly or may be used as a solvent mixture (e.g., a mixture of N-methyl-2-pyrrolidone with a diglyme, a mixture of xylene, diphenyl ether and biphenyl, or a mixture of a solvent having a high dielectric constant and a solvent having a low dielectric constant).

The reaction temperature is generally 0 to 200°C, preferably 10 to 180°C. For promoting the reaction, further, there may be added catalysts such as tertiary amines (e.g., t-butylamine, etc.), metals (e.g., alkali metal, alkaline earth metal, cobalt, tin, zinc, etc.) and salts of these metals.

The molecular weight of the amorphous polyamide is not specially limited. When measured in m-cresol having its concentration of 1 g/dl at 25°C, however, the relative viscosity of the amorphous polyamide is preferably in the range of 1.2 to 5.0, more preferably 1.3 to 4.0. When the relative viscosity exceeds 5.0, undesirably, not only the flowability of the composition is degraded, but also the tenacity typified by Izod impact strength is decreased. When the relative viscosity is lower than 1.2, there is caused a defect that the composition is degraded in mechanical strength.

The number average molecular weight of the amorphous polyamide, when measured by gel permeation chromatography using a polystyrene standard, is in the range of 5,000 to 20,000, preferably 7,000 to 15,000.

An amorphous polyamide having an electron structure composed of an atomic group having donating capability such as an amide bond, etc., in its polymer main chain skeleton can perform an electrostatic interaction at a molecular level with boron nitride nanotubes having polarity and a nano-level structure. As a result, the resin composition of this invention is excellent in heat resistance in spite of a small content of the boron nitride nanotubes that are contained.

### (Method for producing the resin composition)

The resin composition of this invention can be produced by mixing the boron nitride nanotubes and the polyamide (method (a)).

As a method (a), for example, there is employed a method in which the polyamide and boron nitride nanotubes are melt-kneaded. The melt-kneading method is not specially limited, while the kneading can be carried out with a single-screw or twin-screw extruder, a kneader, a labo plastomill, a Banbury mixer, a mixing roll, or the like.

When the method (a) uses a solvent, there can be employed a method in which boron nitride nanotubes are dispersed in a solvent to prepare a dispersion and the polyamide is added and dissolved therein (method (A)), a method in which the polyamide is dissolved in a solvent to prepare a resin solution and the boron nitride nanotubes are added and dispersed therein (method (B)), a method in which the polyamide and boron nitride nanotubes are added to a solvent to prepare a resin composition (method (C)), and the like.

In this invention, these methods can be employed singly or in combination. Of these, the method (A) in which the polyamide is added and dissolved in the dispersion of the boron nitride nanotubes is preferred.

That is, according to this invention, there is provided a process for the production of a resin composition, which comprises the steps of
(i) mixing 0.01 to 50 parts by weight of boron nitride nanotubes with a solvent to obtain a dispersion,
(ii) adding a polyamide to the dispersion to obtain a dope such that the amount of the boron nitride nanotubes is 0.01 to 50 parts by weight per 100 parts by weight of the polyamide, and
(iii) removing the solvent.

The boron nitride nanotubes in the solvent can be improved in dispersibility by subjecting them to beads mill treatment, ultrasonic treatment, or the like to apply a shear force on them. Above all, a method of applying ultrasonic treatment is preferred. In this invention, when ultrasonic treatment is carried out after the polyamide is added to the dispersion, the dispersibility of the boron nitride nanotubes is remarkably improved. The amount of the polyamide per part of the boron nitride nanotubes is preferably 0.1 to 10 parts by weight.

In this invention, the solvent suitable for dissolving the polyamide includes formamide, dimethylformamide, dimethylacetamide, N-methylpyrrolidone, dimethyl sulfoxide, 1,3-dimethyl-2-imidazolidinone, sulfolane, chloroform, tetrahydrofuran, etc., while the solvent shall not be limited thereto, and it can be selected as required. The content of the solvent in the dispersion, when the content of the boron nitride nanotubes is 0.01 to 50 parts by weight, is preferably 0.1 to 10,000 parts by weight, more preferably 1 to 100 parts by weight.

There may be contained solvents such as methanol, ethanol, butanol, o-chlorophenol, acetone, ethyl acetate, ethylene glycol, chlorobenzene, anisole, ethoxybenzene, dichloromethane, o-dichlorobenzene, toluene, xylene, benzene, chlorotoluene and water so long as they do not impair the solubility.

Further, the resin composition can be produced by carrying out polycondensation in the presence of boron nitride nanotubes to produce a polyamide (method (b)).
That is, when the polyamide is produced by polymerization, the boron nitride nanotubes are added simultaneously with raw materials or during the polymerization, whereby the resin composition can be prepared upon completion of the polymerization.

The thus-prepared resin composition may be subjected to melt-kneading treatment for improving its dispersibility. The kneading method is not specially limited, while a single-screw extruder, a twin-screw extruder and a kneader can be used for the kneading. The temperature for the melt-kneading is a temperature that is higher by 5°C to 100°C than a temperature at which the polyamide is softened and flows. When this temperature is too high, undesirably, the resin is decomposed or an abnormal reaction is caused to take place. Further, the time period for the kneading treatment is at least 30 seconds but 15 minutes or less, preferably 1 to 10 minutes.

The boron nitride nanotubes for use in these steps may be coated beforehand with the polyamide as a matrix and used. The method for coating the boron nitride nanotubes with the polyamide is not specially limited, while it includes 1) a solventless method in which the boron nitride nanotubes are added to, and mixed with, the polyamide in a molten state and 2) a method in which the boron nitride nanotubes and the polyamide are dispersed and mixed in a solvent that dissolves the polyamide. In the method 2), ultrasonic wave or various stirring methods can be employed as a method for dispersing the boron nitride nanotubes. As a stirring method, a fast stirring method using a homogenizer or a stirring method using an attriter or ball mill can be used.

Further, when the boron nitride nanotubes coated with a conjugated polymer are used, the conjugated polymer is coated on the boron nitride nanotubes and then the coated boron nitride nanotubes are mixed with, or dispersed in, the polyamide or resin solution as described above, whereby the resin composition of this invention can be produced.

The method for coating the boron nitride nanotubes with a conjugated polymer includes 1) a solventless method in which the boron nitride nanotubes are added to, and mixed with, the conjugated polymer that is in a molten state and 2) a method in which the boron nitride nanotubes and the conjugated polymer are dispersed and mixed in a solvent that dissolves the conjugated polymer. In the method 2), ultrasonic wave or various stirring methods can be employed as a method for dispersing the boron nitride nanotubes. As a stirring method, a fast stirring method using a homogenizer or a stirring method using an attriter or ball mill can be used.

The resin composition of this invention refers to a so-called pre-molding or pre-forming resin composition in the form of a mass, pellets, etc., which is obtained by producing the polyamide by polymerization and compounding it with the boron nitride nanotubes and is not yet formed into any article.

### (Formed or molded article)

The resin composition of this invention can be formed into an article. The formed article includes a film and a fiber. Wet-forming and melt-forming can be applied to the forming.

That is, the formed article can be produced by wet-forming a dope containing 100 parts by weight of the polyamide, 0.01 to 50 parts by weight of the boron nitride nanotubes and a solvent into an article. The wet-forming can be carried out by casting the dope in a support, forming it to a predetermined thickness and removing the solvent. For example, when it is a film, the dope is cast on a substrate such as a glass or metal substrate to perform the forming and removing the solvent, whereby the film can be produced.

The solvent includes formamide, dimethylformamide, dimethylacetamide, N-methylpyrrolidone, dimethyl sulfoxide, 1,3-dimethyl-2-imidazolidinone, sulfolane, chloroform, tetrahydrofuran, etc. The content of the solvent in the dope per 100 parts by weight of the polyamide is preferably 50 to 10,000 parts by weight, more preferably 100 to 5,000 parts by weight.

The molded article can be produced by melt-molding a resin composition containing 100 parts by weight of the polyamide and 0.01 to 50 parts by weight of the boron nitride nanotubes. The melt-molding includes extrusion molding, injection molding and inflation molding. During the molding, flow orientation, shear orientation or stretch orientation can be carried out to improve the orientation of the polyamide and the boron nitride nanotubes, whereby the molded article can be improved in mechanical properties.

### (Other components)

The resin composition of this invention can contain various additives so long as the properties thereof are not impaired. For example, there may be added additives such as other resin, a thermal stabilizer, a flame retardant, an antioxidant, an ultraviolet preventing agent, a lubricant, a mold release agent, a foaming agent, an impact resistance improving agent, a crosslinking agent, a colorant, a filler, etc.

The resin that is suitable includes, for example, an epoxy resin, a phenolic resin, a melamine resin, a polyester resin, an acrylic resin and a crosslinking agent (polyfunctional isocyanate, etc.), styrene copolymers such as a butadiene/styrene copolymer, an acrylonitrile/butadiene/styrene copolymer, etc., polycarbonate, polyethylene terephthalate, polybutylene terephthalate, polyallylate, polysulfone, polyether sulfone, polyether ketone, polyether ether ketone, polyether imide, polyphenylene sulfide, polymethyl methacrylate, polyvinyl chloride, a phenoxy resin, a liquid crystal polymer, a polyolefin, etc., and mixtures of these resins. The content of the above other resin based on the total weight of the resin composition is preferably 1 to 40 % by weight, preferably 30 % by weight or less.

### Examples

Examples will be described below to explain this invention further specifically, while this invention shall not be limited to/by descriptions of these Examples.

The evaluations of properties in Examples were carried out by the following methods.
(1) Average diameter and average length of boron nitride nanotubes
   Fifty boron nitride nanotubes were observed through a transmission electron microscope (TEM), to take an average of each of diameters and lengths thereof, and the averages were used as an average diameter and an average length of the boron nitride nanotubes. As TEM (transmission electron microscope), H-800 by Hitachi Limited was used.
(2) Load elongation measurement
   A sample having a size of 50 mm x 10 mm was measured for a load elongation at a tension rate of 5 mm/minute with UCT-IT by ORIENTEC Co., LTD.
(3) Glass transition temperature
   Measurements were made with TA2920 by TA Instruments in a nitrogen current at a temperature elevation rate of 10°C/minute in a temperature range of 30 to 300°C, and a glass transition temperature was calculated on the basis of the peak value of second scanning.
(4) Thermal expansion coefficient
   Measurements were made with TA2920 by TA Instruments in air at a temperature elevation rate of 10°C/minute in a temperature range of 30 to 80°C, and the value of second scanning was taken as a thermal expansion coefficient.
(5) Polymer weight loss temperature
   Measurements were made with TG 8120 by Rigaku in air at a temperature elevation rate of 10°C/minute in a temperature range of 30 to 800°C, and the polymer weight loss temperature was calculated on the basis of a peak value at the time of 5 % weight loss.
(6) Heat of melting
   A polyamide and a resin composition were measured for heats of melting with a differential scanning calorimeter (DSC) TA2920 supplied by TA Instruments at a temperature elevation rate of 10°C/minute in a temperature range of 30 to 300°C.

### Referential Example 1: Preparation of boron nitride nanotubes

Boron and magnesium oxide were placed at a molar ratio of 1:1 in a crucible made of boron nitride, and the crucible was heated to 1,300°C in a high frequency induction heating furnace. The boron and magnesium oxide reacted to generate gaseous boron oxide (B₂O₂) and a vapor of magnesium. This formed product was transferred into a reactor by means of argon gas, and the temperature was maintained at 1,100°C, followed by the introduction of ammonia gas. Boron oxide and ammonia reacted to generate boron nitride. When 1.55 g of a reaction mixture was fully heated to evaporate a byproduct, 310 mg of a white solid was obtained from the reactor wall. Then, the thus-obtained white solid was washed with concentrated hydrochloric acid and washed with deionized water until the water became neutral. Then, the solid was dried under reduced pressure at 60°C to give boron nitride nanotubes (to be sometimes abbreviated as "BNNT" hereinafter). The thus-obtained BNNT had an average diameter of 27.6 nm and an average length of 2,460 nm and had the form of tubes.

### Referential Example 2: Production of nylon 6 by polymerization

In a three-necked flask equipped with a nitrogen-introducing tube, 500 parts by weight of ε-caprolactam, 10 parts by weight of ε-aminocaproic acid and 10 parts by weight of water were mixed, followed by degassing and substitution of nitrogen inside the flask. Then, the mixture was stirred and allowed to react at 280°C under normal pressure, whereby a polymerization reaction proceeded while water was distilled off. After 5 hours, the polymerization was completed, and after the reaction product was cooled to room temperature, a product inside was collected. The resultant polymer was pulverized with a mill and washed in 1,000 parts by weight of deionized water at 100°C with stirring for 1 hour, and then it was dried under a reduced pressure of 30 mmHg at 80°C for 24 hours to give nylon 6. The thus-obtained nylon 6 was measured for a relative viscosity in a concentration of 1 g/dl with using 96 mass% concentrated sulfuric acid at a temperature of 25°C, to show 2.75.

### Referential Example 3: Production of nylon 66 by polymerization

In a three-necked flask equipped with a nitrogen-introducing tube, 438 parts by weight of adipic acid and 354 parts by weight of hexamethylenediamine were mixed, followed by degassing and substitution of nitrogen inside the flask. Then, under normal pressure, the mixture was stirred and allowed to react at 220°C for 1 hour and then at 280°C for 4 hours, whereby a polymerization reaction proceeded while water was distilled off. After completion of the polymerization, the reaction product was cooled to room temperature to give nylon 66. The thus-obtained nylon 66 was measured for a relative viscosity in a concentration of 1 g/dl with using 96 mass% concentrated sulfuric acid as a solvent at a temperature of 25°C, to show 3.10.

### Example 1

### (Preparation of dispersion)

0.8 part by weight of BNNT obtained in Referential Example 1 were added to 100 parts by weight of formic acid and the mixture was treated in an ultrasonic bath for 2 hours to prepare a dispersion.

### (Preparation of dope)

Then, 15 parts by weight of the nylon 6 prepared in Referential Example 2 was added to the dispersion and the mixture was stirred at room temperature until the nylon 6 was dissolved, to prepare a dope.

### (Production of film)

The thus-obtained dope was cast on a glass substrate with a 200 µm doctor blade, and the cast dope was left at 80°C for 60 minutes and then at 130°C for 60 minutes to form a film. The film was peeled off the glass substrate, fixed to a metal frame and dried at 80°C for 10 minutes and at 130°C for 1 hour. The resultant film had a thickness of 30 µm, a tensile modulus of 1.1 Gpa and a tensile strength of 36.1 Mpa. It also had a glass transition temperature of 41.7°C and a thermal expansion coefficient of 43.9 ppm/°C.

### Comparative Example 1

A film of the nylon 6 was produced in the same manner as in Example 1 except that BNNT were not incorporated. The film had a thickness of 29 µm, a tensile modulus of 0.45 Gpa and a tensile strength of 25.3 Mpa. It also had a glass transition temperature of 40.9°C and a thermal expansion coefficient of 68 ppm/°C.

### Example 2

### (Preparation of dispersion)

0.8 part by weight of BNNT obtained in Referential Example 1 were added to 100 parts by weight of formic acid and the mixture was treated in an ultrasonic bath for 2 hours to prepare a dispersion.

### (Preparation of dope)

Then, 15 parts by weight of the nylon 66 prepared in Referential Example 3 was added to the dispersion and the mixture was stirred at room temperature until the nylon 66 was dissolved, to prepare a dope.

### (Production of film)

The thus-obtained dope was cast on a glass substrate with a 200 µm doctor blade, and the cast dope was left at 80°C for 60 minutes and then at 130°C for 60 minutes to form a film. The film was peeled off the glass substrate, fixed to a metal frame and dried at 80°C for 10 minutes and at 130°C for 1 hour. The resultant film had a thickness of 32 µm, a tensile modulus of 1.2 Gpa and a tensile strength of 38.5 Mpa. It also had a glass transition temperature of 44.1°C and a thermal expansion coefficient of 42.8 ppm/°C.

### Comparative Example 2

A film of the nylon 66 was produced in the same manner as in Example 2 except that BNNT were not incorporated. The film had a thickness of 30 µm, a tensile modulus of 0.47 Gpa and a tensile strength of 26.4 Mpa. It also had a glass transition temperature of 42.5°C and a thermal expansion coefficient of 64.7 ppm/°C.

### Example 3

### (Preparation of dispersion)

45 Parts by weight of the nylon 6 obtained in Referential Example 2 and 0.54 part by weight of BNNT obtained in Referential Example 1 were added to 50 parts by weight of water, and the dispersion was treated in an ultrasonic bath for 2 hours to prepare a dispersion.

### (Preparation of melt)

The thus-prepared dispersion was subjected to stirring and mixing in a three-necked flask equipped with a stirrer, a nitrogen-introducing tube and a discharge tube in a nitrogen atmosphere. The resultant dispersion was subjected to stirring and mixing under normal pressure at 240°C for 5 minutes and then at 260°C under a reduced pressure of 0.5 mmHg for 20 minutes to give a melt in which were uniformly mixed.

### (Production of film)

The thus-obtained melt was cooled, taken out and pulverized with a mill. The resultant pulverization product was melted on a metal plate heated up to 240°C on a hot plate and cast with a 200 µm doctor blade to form a film, and the film was cooled to obtain the film having a thickness of 40 µm. The film had a tensile modulus of 3.0 Gpa and a tensile strength of 85 Mpa. It also had a glass transition temperature of 48.3°C and a thermal expansion coefficient of 60 ppm/°C.

### Comparative Example 3

A film of the nylon 6 was produced in the same manner as in Example 3 except that BNNT were not incorporated. The film had a thickness of 38 µm, a tensile modulus of 2.3 Gpa and a tensile strength of 75 Mpa. It also had a glass transition temperature of 47°C and a thermal expansion coefficient of 65 ppm/°C.

### Comparative Example 4

A film was produced in the same manner as in Example 1 except that BNNT in Example 1 were replaced with carbon nanotubes (CNT, supplied by Shinzhen Nanotech Port Ltd., trade name: L. SWNTs, average diameter 2 nm, average length 5 to 15 µm). The film had a thickness of 37 µm, a tensile modulus of 1.0 Gpa and a tensile strength of 29.1 Mpa. It also had a glass transition temperature of 41.0°C and a thermal expansion coefficient of 69 ppm/°C. Table 1 shows the results in Examples 1 to 3 and Comparative Examples 1 to 4.

**Table 1**

| | | Ex. 1 | C.Ex. 1 | Ex. 2 | C.Ex. 2 | Ex. 3 | C.Ex. 3 | C.Ex. 4 |
|---|---|---|---|---|---|---|---|---|
| Nanotubes | kind | BNNT | BNNT | BNNT | BNNT | BNNT | BNNT | CNT |
| | pbw | 0.8 | 0 | 0.8 | 0 | 0.54 | 0 | 0.8 |
| Polyamide | kind | Nylon 6 | Nylon 6 | Nylon 66 | Nylon 66 | Nylon 6 | Nylon 6 | Nylon 6 |
| | pbw | 15 | 15 | 15 | 15 | 45 | 45 | 15 |
| Tensile modulus | GPa | 1.1 | 0.45 | 1.2 | 0.47 | 3.0 | 2.3 | 1.0 |
| Tensile strength | Mpa | 36.1 | 25.3 | 38.5 | 26.4 | 85 | 75 | 29.1 |
| Thermal expansion coefficient | ppm/°C | 43.9 | 68 | 42.8 | 64.7 | 60 | 65 | 69 |
| Glass transition temperature | °C | 41.7 | 40.9 | 44.1 | 42.5 | 48.3 | 47 | 41.0 |

| | | | | | | | | |
|---|---|---|---|---|---|---|---|---|
| Ex. = Example, C.Ex. = Comparative Example pbw = parts by weight | | | | | | | | |

### Example 4

495 parts by weight of ε-caprolactam was heated to 80°C in a pear-shaped boiling flask. To the resultant melt were added 5 parts by weight of BNNT obtained in Referential Example 1, and the mixture in the flask was treated in an ultrasonic bath at 80°C for 2 hours. The mixture was cooled to room temperature and then pulverized to give a starting ε-caprolactam powder in which BNNT were uniformly dispersed.

500 parts by weight of the starting powder was mixed with 10 parts by weight of ε-aminocaproic acid and 10 parts by weight of water in a three-necked flask connected to a nitrogen-introducing tube, followed by degassing and substitution of nitrogen inside. Then, the mixture was stirred and allowed to react at 280°C under normal pressure, whereby a polymerization reaction proceeded while water was distilled off. After 5 hours, the polymerization was completed, and after the reaction product was cooled to room temperature, a product inside was collected. The product was pulverized with a mill and then washed in 5,000 parts by weight of deionized water at 100°C with stirring for 1 hour, and then it was dried under a reduced pressure of 30 mmHg at 80°C for 24 hours to give a resin composition containing nylon 6 and BNNT (nylon 6/BNNT = 99/1 (weight ratio)). The thus-obtained resin composition was measured for a relative viscosity in a concentration of 1 g/dl with using 96 mass% concentrated sulfuric acid at a temperature of 25°C, to show 2.85. Further, the resin composition had a glass transition temperature of 49.0°C.

### Referential Example 4: Production of polyamide C12T by polymerization

In a three-necked flask equipped with a nitrogen-introducing tube, 120.22 parts by weight of 1,12-diaminododecane and 191.00 parts by weight of diphenyl terephthalate were mixed, followed by degassing and substitution of nitrogen inside. Then, the mixture was stirred and allowed to react under normal pressure at 250°C whereby it was ascertained that phenol was distilled off. The reaction mixture was temperature-increased up to 300°C over the period of 20 minutes, the pressure inside was reduced to 0.1 mmHg and the reaction for polymerization was allowed to proceed for 2 hours to complete the polymerization. A product inside was cooled to room temperature, and the resultant polymer was collected. Then, the polymer was pulverized with a mill and washed in 1,000 parts by weight of methanol at 50°C with stirring for 1 hour, and then it was dried under a reduced pressure of 30 mmHg at 60°C for 24 hours to a polyamide C12T of the following formula. The polyamide was measured for a relative viscosity in a concentration of 1 g/dl with using 96 % by weight concentrated sulfuric acid at a temperature of 25°C, to show 1.45.

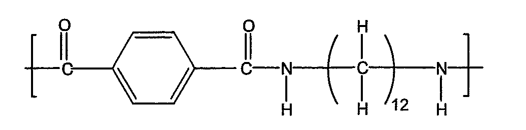

### Example 5

In a three-necked flask equipped with a nitrogen-introducing tube, 0.8 part by weight of BNNT obtained in Referential Example 1 were fully mixed with 79.2 parts by weight of the polyamide C12T powder obtained in Referential Example 4. The mixture was melt-kneaded in a labo plastomill at 330°C for 5 minutes, then pelletized and cooled to prepare pellets of a polyamide C12T resin composition containing BNNT. The pellets had a glass transition temperature of 101.1°C and a crystal melting point of 294.8°C.

### Comparative Example 5

Polyamide C12T pellets were prepared in the same manner as in Example 5 except that no BNNT were incorporated. The pellets had a glass transition temperature of 96.2°C and a crystal melting point of 286.9°C.

### Comparative Example 6

Pellets of a polyamide C12T resin composition containing multiple-layer carbon nanotubes were prepared in the same manner as in Example 5 except that BNNT were replaced with multiple-layer carbon nanotubes (CNT, supplied by Shinzhen Nanotech Port Ltd., trade name: L. SWNTs, average diameter 2 nm, average length 5 to 15 µm). The pellets had a glass transition temperature of 98.5°C and a crystal melting point of 289.3°C.

### Example 6

Amoco's TORLON® 4000T having a recurring units of the following formula and having a solution viscosity of 4,000 cp in 25 % NMP was used as a polyamideimide.

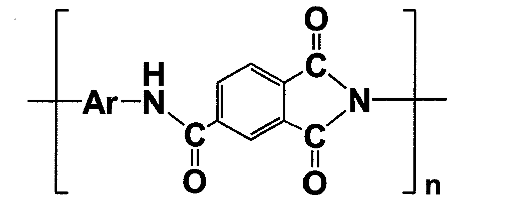

In the formula, Ar is a mixture of aromatic amines.

### (Preparation of dispersion)

0.15 part by weight of BNNT were added to 100 parts by weight of N-methyl-2-pyrrolidone and the mixture was treated in an ultrasonic bath for 4 hours to prepare a dispersion.

### (Preparation of dope)

To the thus-obtained dispersion was added 0.15 part by weight of a polyamideimide (TORLON® 4000T, supplied by Amoco), and when the mixture was treated in an ultrasonic bath for 30 minutes, BNNT were remarkably improved in dispersibility. Then, 14.85 parts by weight of a polyamideimide was added and the mixture was stirred at 60°C until the polyamideimide was completely dissolved, to prepare a dope.

### (Production of film)

The thus-obtained dope was cast on a glass substrate with a 200 µm doctor blade, and the cast dope was dried at 80°C for 1 hour and then at 130°C for 1 hour to form a film. Then, the dry film was placed in deionized water and the film was peeled off the glass substrate surface and washed for 1 hour. Then, the film was fixed to a metal frame and dried under a reduced pressure of 30 mmHg at 80°C for 1 hour and at 180°C for 1 hour. The thus-obtained film had a thickness of 19 µm, a glass transition temperature of 276.9°C, a thermal expansion coefficient of 36.3 ppm/°C, a tensile strength of 83.44 MPa and a tensile modulus of 2.98 Gpa.

### Example 7

### (Preparation of coated BNNT)

0.1 part by weight of BNNT obtained in Referential Example 1 were added to 100 parts by weight of dichloromethane, and the mixture was treated in an ultrasonic bath for 2 hours to prepare a BNNT dispersion. Then, 0.1 part by weight of Aldrich's poly(m-phenylenevinylene-co-2,5-dioctoxy-p-phenylenevinylene) was added, and the mixture was ultrasonically treated for 1 hour. The resultant dispersion was filtered through a Millipore's omnipore 0.1 µm membrane filter and washed with a large amount of dichloromethane, and then it was dried under reduced pressure at 60°C for 2 hours to give BNNT coated with a yellow conjugated polymer. The amount of the conjugated polymer coated on BNNT on the basis of the BNNT was 4.2 % by weight.

### (Preparation of dispersion)

The thus-obtained coated BNNT (0.18 parts by weight of BNNT contained) were added to 100 parts by weight of N-methyl-2-pyrrolidone and the mixture was treated in an ultrasonic bath for 2 hours to prepare a BNNT dispersion.

### (Preparation of dope)

To the resultant dispersion was added 15 parts by weight of a polyamideimide (TORLON® 4000T), and the mixture was stirred at room temperature until the resin was completely dissolved, to prepare a dope.

### (Production of film)

The thus-obtained dope was cast on a glass substrate with a 200 µm doctor blade and then the cast dope was dried at 80°C for 1 hour and 130°C for 1 hour. Then, the dry film was placed in deionized water, peeled off the glass substrate surface and washed for 1 hour. The thus-obtained film was fixed to a metal frame and dried under a reduced pressure of 30 mmHg at 80°C for 1 hour and at 180°C for 1 hour. The thus-obtained film had a thickness of 20 µm, a glass transition temperature of 277.5°C, a thermal expansion coefficient of 35.3 ppm/°C, a tensile strength of 83.78 MPa and a tensile modulus of 3.00 Gpa.

### Comparative Example 7

A polyamideimide film was produced in the same manner as in Example 6 except that BNNT were not incorporated. The film had a thickness of 18 µm, a glass transition temperature of 267.0°C, a thermal expansion coefficient of 45.9 ppm/°C, a tensile strength of 78.23 MPa and a tensile modulus of 2.55 Gpa. Table 2 shows the results of Examples 6 and 7 and Comparative Example 7.

**Table 2**

| | | Example 6 | Example 7 | Comparative Example 7 |
|---|---|---|---|---|
| Nanotubes | kind | BNNT | BNNT | -- |
| | pbw | 0.15 | 0.1 | 0 |
| Polyamide | kind | Polyamideimide | Polyamideimide | Polyamideimide |
| | pbw | 15 | 15 | 15 |
| Tensile modulus | GPa | 2.98 | 3.00 | 2.55 |
| Tensile strength | Mpa | 83.4 | 83.78 | 78.23 |
| Thermal expansion coefficient | ppm/°C | 36.3 | 35.3 | 45.9 |
| Glass transition temperature | °C | 276.9 | 277.5 | 267.0 |

| | | | | |
|---|---|---|---|---|
| pbw = parts by weight | | | | |

### Example 8

As an amorphous polyamide, Daicel-Degussa's TROGAMID T® having the following formula and having a number average molecular weight of 30,000 to 40,000 was used.

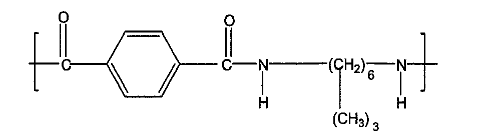

### (Preparation of dispersion)

0.15 part by weight of BNNT were added to 100 parts by weight of N-methyl-2-pyrrolidone and the mixture was treated in an ultrasonic bath for 4 hours to prepare a dispersion.

### (Preparation of dope)

To the thus-obtained dispersion was added 0.15 part by weight of an amorphous polyamide (TROGAMID T®, supplied by Daicel-Degussa) and the mixture was treated in an ultrasonic bath for 30 minutes, whereby the BNNT were remarkably improved in dispersibility. Then, 14.85 parts by weight of an amorphous polyamide was added and the mixture was stirred at 60°C until the amorphous polyamide was completely dissolved, to prepare a dope.

### (Production of film)

The thus-obtained dope was cast on a glass substrate with a 200 µm doctor blade and then the cast dope was dried at 80°C for 1 hour and at 130°C for 1 hour. Then, the dry film was placed in deionized water, peeled off the glass substrate surface and washed for 1 hour. The thus-obtained film was fixed to a metal frame and dried under a reduced pressure of 30 mmHg at 80°C for 1 hour and 180°C for 1 hour. The film had a thickness of 25 µm, a glass transition temperature of 141.9°C and a thermal expansion coefficient of 54.5 ppm/°C. Further, the 5 % polymer weight loss temperature thereof was 376.8°C. Further, when the film was measured for a heat of melting with the differential scanning calorimeter, the heat of melting was not ascertained.

### Example 9

An amorphous polyamide film in which BNNT were dispersed was produced in the same manner as in Example 8 except that 0.30 part by weight of BNNT were used. The thus-obtained film had a thickness of 22 µm, a glass transition temperature of 142.4°C and a thermal expansion coefficient of 51.0 ppm/°C. Further, the 5 % polymer weight loss temperature thereof was 383.6°C. Further, when the film was measured for a heat of melting with the differential scanning calorimeter, the heat of melting was not ascertained.

### Example 10

### (Preparation of coated BNNT)

0.1 part by weight of BNNT obtained in Referential Example 1 were added to 100 parts by weight of dichloromethane, and the mixture was treated in an ultrasonic bath for 2 hours to prepare a BNNT dispersion. Then, 0.1 part by weight of Aldrich's poly(m-phenylenevinylene-co-2,5-dioxtoxy-p-phenylenevinylene) was added, and the mixture was ultrasonically treated for 1 hour. The resultant dispersion was filtered through a Millipore's omnipore 0.1 µm membrane filter and washed with a large amount of dichloromethane, and then it was dried under reduced pressure at 60°C for 2 hours to give BNNT coated with a yellow conjugated polymer. The amount of the conjugated polymer coated on BNNT on the basis of the BNNT was 4.2 % by weight.

### (Preparation of dispersion)

The thus-obtained coated BNNT (0.18 parts by weight of BNNT contained) were added to 100 parts by weight of N-methyl-2-pyrrolidone and the mixture was treated in an ultrasonic bath for 2 hours to prepare a dispersion.

### (Preparation of dope)

To the resultant dispersion was added 15 parts by weight of an amorphous polyamideimide (TROGAMID T®, supplied by Daicel-Degussa), and the mixture was stirred at room temperature until the resin was completely dissolved, to prepare a dope.

### (Production of film)

The thus-obtained dope was cast on a glass substrate with a 200 µm doctor blade and then the cast dope was dried at 80°C for 1 hour and at 130°C for 1 hour. Then, the dry film was placed in deionized water, peeled off the glass substrate surface and washed for 1 hour. Then, the film was fixed to a metal frame and dried under a reduced pressure of 30 mmHg at 80°C for 1 hour and 180°C for 1 hour. The thus-obtained film had a thickness of 25 µm, a glass transition temperature of 142.0°C and a thermal expansion coefficient of 52.5 ppm/°C. Further, the 5 % polymer weight loss temperature thereof was 377.5°C. Further, when the film was measured for a heat of melting with the differential scanning calorimeter, the heat of melting was not ascertained.

### Comparative Example 8

An amorphous polyamide film was produced in the same manner as in Example 8 except that BNNT were not incorporated. The film had a thickness of 24 µm, a glass transition temperature of 131.2°C and a thermal expansion coefficient of 67.8 ppm/°C. The 5 % polymer weight loss temperature thereof was 348.0°C. Table 3 shows the results of Examples 8 to 10 and Comparative Example 8.

**Table 3**

| | | Example 8 | Example 9 | Example 10 | Comparative Example 8 |
|---|---|---|---|---|---|
| Nanotubes | Kind | BNNT | BNNT | Coated BNNT | -- |
| | pbw | 0.15 | 0.30 | 0.18 | 0 |
| Polyamide | kind | Amorphous polyamide | Amorphous polyamide | Amorphous polyamide | Amorphous polyamide |
| | pbw | 15 | 15 | 15 | 15 |
| 5% weight loss temperature | °C | 376.8 | 383.6 | 377.5 | 348.0 |
| Thermal expansion coefficient | ppm/°C | 54.5 | 51.0 | 52.5 | 67.8 |
| Glass transition temperature | °C | 141.9 | 142.4 | 142.0 | 131.2 |

| | | | | | |
|---|---|---|---|---|---|
| pbw: parts by weight | | | | | |

### Example 11

### (Preparation of dispersion)

100 Milligrams of BNNT obtained in Referential Example 1 were added to 50 ml of N-methyl-2-pyrrolidone, and the mixture was ultrasonically treated with a three-frequency ultrasonic washer (supplied by AS ONE CORPORATION, output 100 W, 28 Hz) for 30 minutes to prepare a dispersion. Further, 100 mg of poly(m-phenyleneisophthalamide) containing a recurring unit of the following formula and having an intrinsic viscosity of 1.35 dl/g (to be sometimes abbreviated as "PMPIA-1" hereinafter) was added to the dispersion, and the mixture was further ultrasonically treated for 1 hour to give a dispersion.

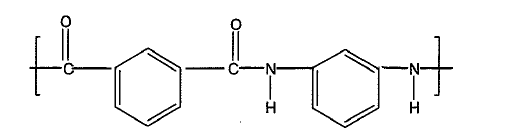

### (Preparation of dope)

The thus-obtained dispersion was cooled in an ice bath, 10 g of PMPIA-1 was added with cooling, and the mixture was dispersed. Then, the PMPIA-was dissolved by heating heat to prepare a dope containing PMPIA-1, BNNT and NMP.

### (Production of film)

The thus-obtained dope was cast on a glass substrate with a 200 µm doctor blade and the cast dope was dried at 80°C for 1 hour and at 130°C for 1 hour to obtain a dry film on the glass substrate. The dry film was immersed in ice water, peeled off the glass substrate, fixed to a metal frame and dried at 80°C for 1 hour and at 130°C for 1 hour to give a film. The film had a thickness of 20 µm, a thermal expansion coefficient of 42 ppm, a tensile modulus of 4.1 Gpa and a strength of 57.8 Mpa. Fig. 1 shows an optical microscope photograph of the film. It can be said that BNNT had very high dispersibility.

### Comparative Example 9

50 Grams of NMP was cooled in an ice bath, 10 g of PMPIA-1 was added with cooling and dispersed, and PMPIA-1 was dissolved by heating to prepare a dope. The dope was cast on a glass substrate with a 200 µm doctor blade and then the cast dope was dried at 80°C for 1 hour and at 130°C for 1 hour to obtain a dry film on the glass substrate. The dry film was immersed in ice water, peeled off the glass substrate, fixed to a metal flame and dried at 80°C for 1 hour and at 130°C for 1 hour to obtain a film. The thus-obtained film had a thickness of 20 µm, a thermal expansion coefficient of 49.0 ppm, a tensile modulus of 3.7 Gpa and a strength of 43.7 Mpa. Table 4 shows the results of Example 11 and Comparative Example 9.

**Table 4**

| | | Example 11 | Comparative Example 9 |
|---|---|---|---|
| Nanotubes | kind | BNNT | - |
| | mg | 100 | 0 |
| Polyamide | kind | PMPIA-1 | PMPIA-1 |
| | g | 10 | 10 |
| Tensile modulus | GPa | 4.1 | 3.7 |
| Tensile strength | Mpa | 57.8 | 43.7 |
| Thermal expansion coefficient | ppm/°C | 42 | 49 |

### Example 12

As an aromatic polyamide, CONEX® supplied by TEIJIN TECHNO PRODUCTS LIMITED (poly-m-phenyleneisopthalamide, IV=1.4 (in N-methyl-2-pyrrolidine) was used (to be sometimes abbreviated as "PMPIA-2" hereinafter).

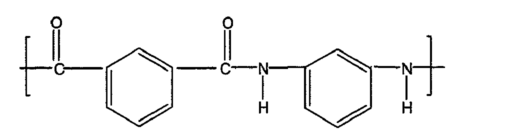

### (Preparation of dispersion)

0.60 part by weight of BNNT obtained in Referential Example 1 were added to 100 parts by weight of N-methyl-2-pyrrolidine and the mixture was treated in an ultrasonic bath for 4 hours to prepare a dispersion.

### (Preparation of dope)

0.60 part by weight of PMPIA-2 was added to the dispersion and when the mixture was treated in an ultrasonic bath for 30 minutes, the BNNT was remarkably improved in dispersibility. Then, 14.40 parts by weight of PMPIA-2 was added and the mixture was stirred at 40°C until PMPIA-2 was dissolved to prepare a dope. (Production of film)

The thus-obtained dope was cast on a glass substrate with a 200 µm doctor blade, and the solvent was extracted by immersing the glass substrate in deionized water to form a film. The film was washed in the current of deionized water for 1 hour, then fixed to a metal frame and dried under a reduced pressure of 30 mmHg at 80°C for 1 hour and at 120°C for 1 hour. Then, the film was fixed to a metal die and monoaxially stretched 1.55 times with a high-temperature biaxial stretching machine (X7D-HT, supplied by TOYO SEIKI SEISAKU-SHO, LTD.) at 270°C to give a stretched film having a thickness of 50 µm. The film had a thermal expansion coefficient of 22.6 ppm/°C and a tensile strength of 139.5 MPa. Further, it also had a tensile modulus of 4.43 GPa and an elongation percentage of 16.7 %.

### Comparative Example 10

A 1.55 times stretched film was obtained in the same manner as in Example 12 except that BNNT was not incorporated. The film had a thickness of 50 µm, a thermal expansion coefficient of 31.4 ppm/°C and a tensile strength of 115.4 MPa. Further, it also had a tensile modulus of 4.14 GPa and an elongation percentage of 11.8 %.

### Comparative Example 11

A 1.55 times stretched film of PMPIA-2 was obtained in the same manner as in Example 12 except that BNNT were replaced with carbon nanotubes (CNT, supplied by Shinzhen Nanotech Port Ltd., trade name: L. SWNTs, average diameter 2 nm, average length 5 to 15 µm). The film had a thickness of 51 µm, a thermal expansion coefficient of 27.7 ppm/°C and a tensile strength of 106.9 MPa. Further, it also had a tensile modulus of 3.96 GPa and an elongation percentage of 12.4 %.

### Comparative Example 12

A 1.55 times stretched film of PMPIA-2 was obtained in the same manner as in Example 12 except that BNNT were replaced with hexagonal boron nitride (supplied by Aldrich, average particle diameter 10 µm). The film had a thickness of 50 µm, a thermal expansion coefficient of 25.4 ppm/°C and a tensile strength of 87.0 MPa. Further, it also had a tensile modulus of 3.60 GPa and an elongation percentage of 14.6 %. Table 5 shows the results of Example 12 and Comparative Examples 10 to 12.

**Table 5**

| | | Example 12 | Comparative Example 10 | Comparative Example 11 | Comparative Example 12 |
|---|---|---|---|---|---|
| Nanotubes | kind | BNNT | - | CNT | Hexagonal boron nitride |
| | pbw | 0.60 | 0 | 0.6 | 0.6 |
| Polyamide | kind | PMPIA-2 | PMPIA-2 | PMPIA-2 | PMPIA-2 |
| | pbw | 15 | 15 | 15 | 15 |
| Tensile modulus | GPa | 4.43 | 4.14 | 3.96 | 3.60 |
| Tensile strength | Mpa | 139.5 | 115.4 | 106.9 | 87.0 |
| Thermal expansion coefficient | ppm/°C | 22.6 | 31.4 | 27.7 | 25.4 |
| Elongation percentage | % | 16.7 | 11.8 | 12.4 | 14.6 |

| | | | | | |
|---|---|---|---|---|---|
| pbw = parts by weight | | | | | |

### Effect of the Invention

The resin composition of this invention is excellent in the dispersibility of the boron nitride nanotubes. As a result, the resin composition of this invention, when formed into an article, can give a formed article excellent in mechanical properties and dimensional stability. When formed into an article, further, the resin composition of this invention can give a formed excellent in insulating properties. Further, the resin composition of this invention has excellent thermal conductivity. The resin composition of this invention is chemically stable and has excellent resistance to oxidation over resin compositions containing carbon nanotubes.

### Industrial Utility

Since being excellent in insulating properties and thermal conductivity, the resin composition of this invention can be applied to insulating heat-radiating materials. The resin composition of this invention can be formed into desired forms by any forming method such as a solution method, a melt-forming method, or the like. The formed article of this invention can be suitably used in the fields of automobiles, machines, construction, industrial materials and electric-electronic products.

## Claims

1. A resin composition comprising 100 parts by weight of a polyamide and 0.01 to 50 parts by weight of boron nitride nanotubes.

2. The resin composition of claim 1, wherein the content of the boron nitride nanotubes per 100 parts by weight of the polyamide is 0.01 to 30 parts by weight.

3. The resin composition of claim 1, wherein the boron nitride nanotubes have an average diameter of 0.4 nm to 1 µm and an aspect ratio of 5 or more.

4. The resin composition of claim 1, wherein the polyamide mainly contains recurring units of the following formula (1), 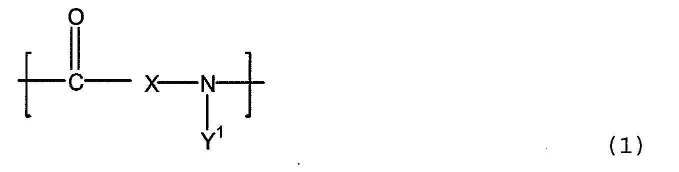 wherein X is 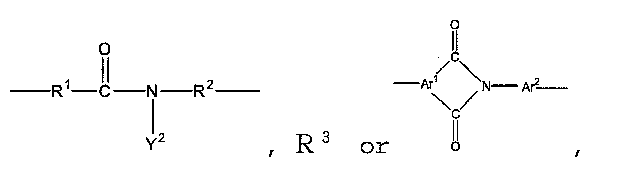 in which each of R¹, R² and R³ is independently an aliphatic hydrocarbon group having 2 to 16 carbon atoms or an aromatic hydrocarbon group having 6 to 20 carbon atoms,
Ar¹ is an aromatic hydrocarbon group having 6 to 20 carbon atoms,
Ar² is an aromatic hydrocarbon group having 6 to 20 carbon atoms or an aliphatic hydrocarbon group having 2 to 16 carbon atoms, and
each of Y¹ and Y² is independently a hydrogen atom or an alkyl group having 1 to 16 carbon atoms.

5. The resin composition of claim 1, wherein the polyamide mainly contains recurring units of the following formula (2), 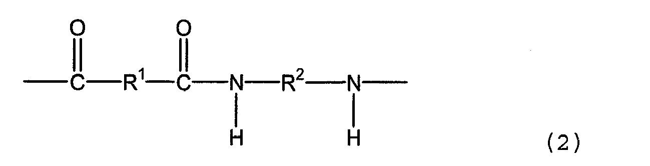 in which each of R¹ and R² is independently an aliphatic hydrocarbon group having 4 to 16 carbon atoms.

6. The resin composition of claim 5, wherein R¹ is a tetramethylene group, a hexamethylene group, a decamethylene group or a 1,4-cyclohexylene group and R² is a tetramethylene group, a hexamethylene group, a nonamethylene group or a 1,4-cyclohexylene group in the formula (2).

7. The resin composition of claim 1, wherein the polyamide mainly contains recurring units of the following formula (3), 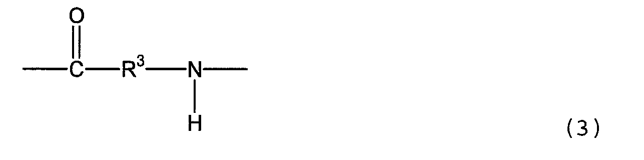 in which R³ is a divalent aliphatic hydrocarbon group having 2 to 12 carbon atoms.

8. The resin composition of claim 7, wherein R³ is a pentamethylene group, a decamethylene group or an undecamethylene group in the formula (3).

9. The resin composition of claim 1, wherein the polyamide mainly contains recurring units of the following formula (2), 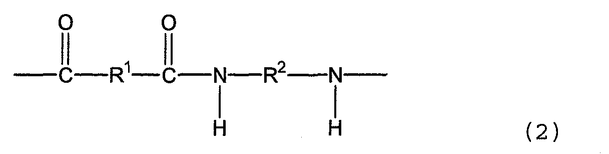 in which each of R¹ and R² is independently an aromatic hydrocarbon group having 6 to 20 carbon atoms.

10. The resin composition of claim 1, wherein the polyamide mainly contains recurring units of the following formula (2), 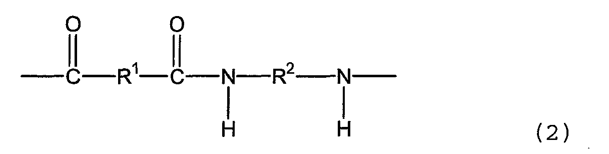 wherein R¹ is an aromatic hydrocarbon group having 6 to 20 carbon atoms, and
R² is an aliphatic hydrocarbon group having 2 to 20 carbon atoms.

11. The resin composition of claim 1, wherein the polyamide mainly contains recurring units of the following formula (4), 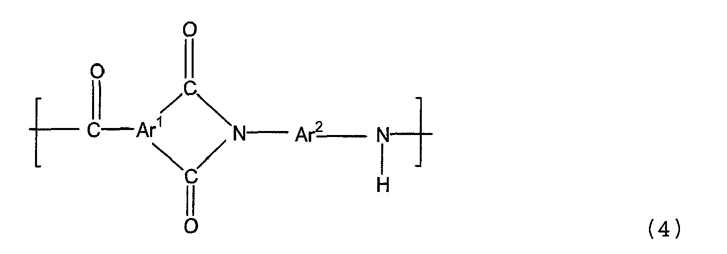 wherein Ar¹ is a trivalent aromatic hydrocarbon group having 5 to 20 carbon atoms, and
Ar² is a divalent aromatic hydrocarbon group having 5 to 20 carbon atoms.

12. The resin composition of claim 11, wherein Ar¹ is 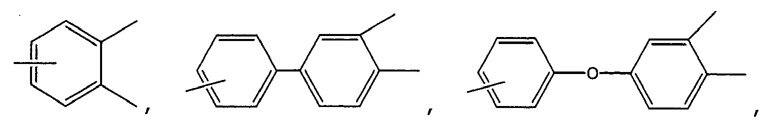 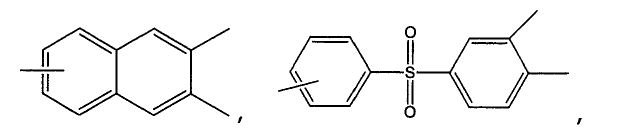 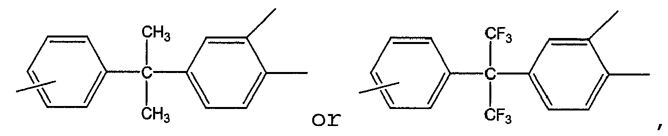 and Ar² is 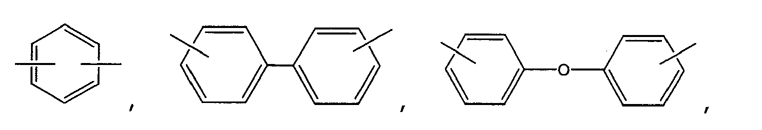 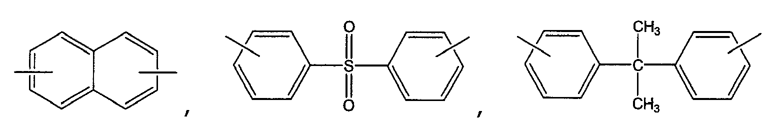 or

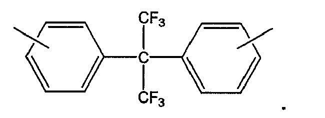

13. The resin composition of claim 1, wherein the polyamide main contains recurring units of the following formula (2), 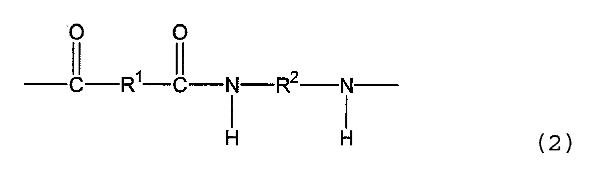 in which R¹ is a phenylene group, and
R² is an aliphatic hydrocarbon group having 3 to 16 carbon atoms and having a side chain or an alicyclic hydrocarbon group having 5 to 16 carbon atoms.

14. The resin composition of claim 1, wherein the polyamide is amorphous.

15. The resin composition of claim 1, wherein the polyamide is crystalline.

16. The resin composition of claim 1, wherein the boron nitride nanotubes are coated with a conjugated polymer.

17. The resin composition of claim 1, wherein the conjugated polymer is polyphenylenevinylene, polythiophene, polyphenylene, polypyrrole, polyaniline or polyacetylene.

18. A formed article from the resin composition of claim 1.

19. The formed article of claim 14, which is a film or a fiber.

20. A process for the production of the resin composition of claim 1, which comprises the steps of
(i) mixing 0.01 to 50 parts by weight of boron nitride nanotubes with a solvent to obtain a dispersion,
(ii) adding a polyamide to the dispersion to obtain a dope such that the amount of the boron nitride nanotubes is 0.01 to 50 parts by weight per 100 parts by weight of the polyamide, and
(iii) removing the solvent.

21. The process for the production of a resin composition as recited in claim 1, wherein the polyamide and the boron nitride nanotubes are melt-kneaded.

22. The process for the production of a resin composition as recited in claim 1, wherein the polyamide is produced by polycondensation in the presence of the boron nitride nanotubes.

23. A process for the production of a formed article, which comprises wet-forming a dope containing 100 parts by weight of a polyamide, 0.01 to 50 parts by weight of boron nitride nanotubes and a solvent into the formed article.

24. A process for the production of a formed article, which comprises melt-forming a resin composition containing 100 parts by weight of a polyamide and 0.01 to 50 parts by weight of boron nitride nanotubes into the formed article.
